# EUROPEAN PATENT APPLICATION

(11) **EP 2 432 066 A1**
(43) Date of publication of application: **21.03.2012**
(21) Application number: 10759795.7
(22) Date of filing: 10.03.2010
(51) Int. Cl.: H01M 10/0587, H01M 4/13, H01M 10/052, H01M 10/0566

(54) **ELECTRODE FOR LITHIUM ION SECONDARY BATTERY, AND LITHIUM ION SECONDARY BATTERY**

(30) Priority: 14.05.2009 JP 2009117411
(71) Applicant: Panasonic Corporation, Kadoma-shi Osaka 571-8501 (JP)
(72) Inventor: ENDO, Kazuki, 1-61 Shiromi 2-chome Chuo-ku, Osaka-shi, Osaka 540-6207 (JP); FUJIKAWA, Masato, 1-61 Shiromi 2-chome Chuo-ku, Osaka-shi, Osaka 540-6207 (JP)
(74) Representative: TBK
(86) International application number: PCT/JP2010/001710
(87) International publication number: WO 2010/131401

(57) **Abstract**

A lithium ion secondary battery including an electrode for a lithium ion secondary battery, the electrode including: a current collector 30; an electrode active material layer 31 being laminated on a surface of the current collector 30 and induding an electrode active material 32 capable of absorbing and desorbing lithium ions; a lithium ion conductive layer 13 being laminated on a surface of the electrode active material layer 31, and induding a lithium ion conductive gel swelled with a non-aqueous electrolyte; and a porous heat-resistant layer 14 being laminated on a surface of the lithium ion conductive layer 13, and induding insulating metal oxide particles.

## Description

### [Technical Field]

The present invention relates to an electrode for a lithium ion secondary battery and a lithium ion secondary battery. More specifically, the present invention relates to an improvement of an electrode for a lithium ion secondary battery.

### [Background Art]

Lithium ion secondary batteries are lightweight and have a high energy density, and for this reason, have been practically used mainly as a power source for portable electronic equipment. At present, lithium ion secondary batteries are attracting attention as a large-sized high-output power source (e.g., a vehide-mounted power source), the development of which is actively underway.

Lithium ion secondary batteries indude a positive electrode, a negative electrode, and a separator interposed therebetween. The separator has a function of providing electrical insulation between the positive electrode and the negative electrode and of retaining non-aqueous electrolyte. Typically, a porous film made of polyolefin such as polyethylene and polypropylene is used as the separator.

The separator, because of the presence of a large number of pores, is permeable to lithium ions. When the temperature inside the battery is elevated, the pores in the separator are dosed to stop the permeation of lithium ions. As a result, the reactions in the battery are hafted, and thus a further elevation in battery temperature is prevented. As described above, the separator functions effectively also in improving the safety of the batteries.

However, the separator is susceptible to breakage due to the contact with a rough surface of the electrode or a scratch on the surface of the electrode formed in the process of battery fabrication, or due to the entrance of foreign matters in the process of battery fabrication. Internal short circuit tends to occur at a portion where the separator is broken. If intemal short circuit occurs, heat is generated at the short-circuited portion. Due to the heat generation, the separator around the short-circuited portion is exposed to a high temperature and shrinks. It is presumed that, as a result, the short-circuited area expands, and in some cases, the battery falls in an overheated state.

Various proposals have been suggested in order to prevent the occurrence of intemal short circuit due to a breakage of the separator. Patent Literature 1 discloses providing, on an electrode surface, a porous heat-resistant layer induding electrically insulating metal oxide particles (hereinafter also simply referred to as "metal oxide particles') such as alumina, silica, and zirconia, and a binder such as a polyacrylic add derivative and a cellulose derivative.

Patent Literature 2 discloses using, in place of the separator, a porous heat-resistant layer induding metal oxide partides and an electrically insulating binder which swells upon contact with non-aqueous electrolyte. The porous heat-resistant layer is formed on, for example, an electrode surface.

### [Citation List]

### [Patent Literature]

[PTL 1] Japanese Laid-Open Patent Publication No. H9-147916
[PTL 2] Japanese Laid-Open Patent Publication No. 2000-3728

### [Summary of Invention]

### [Technical Problem]

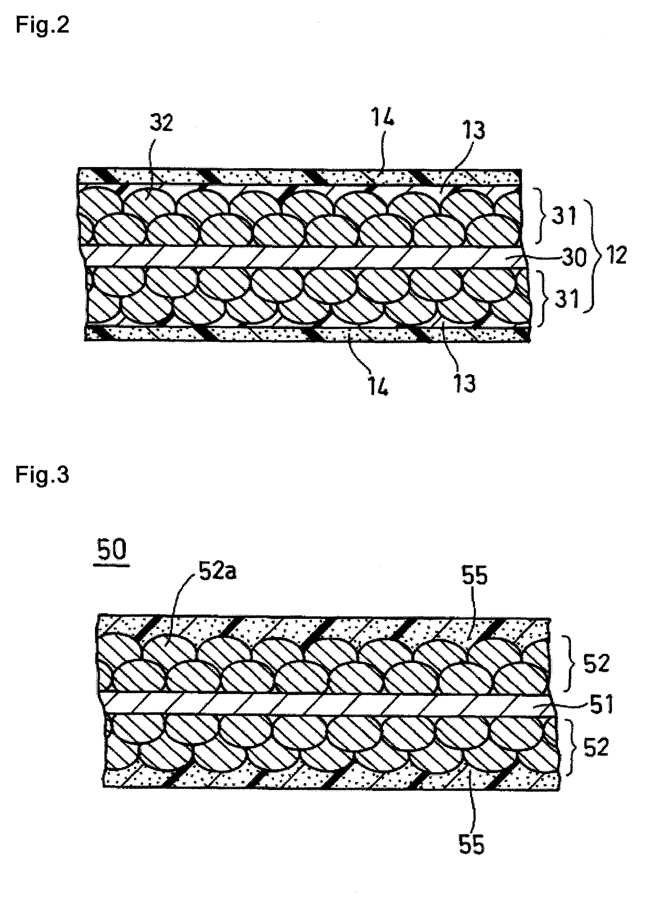

Fig. 3 is a longitudinal sectional view schematically showing the configuration of a negative electrode 50 disclosed in Patent Literatures 1 and 2. The negative electrode 50 indudes a negative electrode current collector 51 made of copper foil, a negative electrode active material layer 52 formed on a surface of the negative electrode current collector 51, and a porous heat-resistant layer 55 formed on the surface of the negative electrode active material layer 52. The negative electrode active material layer 52 indudes graphite partides 52a serving as a negative electrode active material, and a binder.

The porous heat-resistant layer 55 can be formed by mixing metal oxide particles and a binder with an organic solvent to prepare a slurry, applying the prepared slurry onto the surface of the negative electrode active material layer 52, and drying the applied film. When the slurry is applied onto the surface of the negative electrode active material layer 52, the slurry permeates into the negative electrode active material layer 52, and as a result, the gaps between the graphite particles 52a are dogged with the metal oxide particles. This, in tum, inhibits the permeation of the non-aqueous electrolyte throughout the negative electrode active material layer 52, and thus the lithium ion conductivity of the negative electrode active material layer 52 is reduced. Further, the electrical conductivity between the graphite particles 52a is also reduced. As a result, problematically, the load characteristics of the lithium ion secondary battery are deteriorated.

Moreover, when the porous heat-resistant layer is formed on the surface of the active material layer, pinholes penetrating thorough the porous heat-resistant layer in the thickness direction tend to occur due to roughness on the surface of the active material layer. If there are a large number of such pinholes in the porous heat-resistant layer, the ratio of the area not covered with the porous heat-resistant layer on the surface of the active material layer is increased, and thus, problematically, the intemal short circuit cannot be sufficiently suppressed.

The present invention intends to provide a lithium ion secondary battery capable of sufficiently suppressing the occurrence of internal short circuit due to a breakage of the separator.

### [Solution to Problem]

One aspect of the present invention is an electrode for a lithium ion secondary battery including: a current collector; an electrode active material layer being laminated on a surface of the current collector, and induding an electrode active material capable of absorbing and desorbing lithium ions; a lithium ion conductive layer being laminated on a surface of the electrode active material layer, and induding a lithium ion conductive gel swelled with a non-aqueous electrolyte; and a porous heat-resistant layer being laminated on a surface of the lithium ion conductive layer, and induding electrically insulating metal oxide particles.
Another aspect of the present invention is a lithium ion secondary battery including: an electrode assembly induding a positive electrode, a negative electrode, and a separator interposed between the positive electrode and the negative electrode; and a non-aqueous electrolyte, wherein at least one of the positive electrode and the negative electrode is the above-described electrode for a lithium ion secondary battery.

### [Advantageous Effects of Invention]

According to the present invention, it is possible to provide a lithium ion secondary battery capable of sufficiently suppressing the occurrence of intemal short circuit due to a breakage of the separator, without sacrificing the load characteristics of the battery. Therefore, the lithium ion secondary battery of the present invention is excellent in load characteristics and has a high level of safety.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

Fig.1 is a longitudinal cross-sectional view schematically showing the configuration of a lithium ion secondary battery of a first embodiment of the present invention.
Fig. 2 is a longitudinal cross-sectional view schematically showing the configuration of a negative electrode induded in the lithium ion secondary battery shown in Fig. 1.
Fig. 3 is a longitudinal cross-sectional view schematically showing the configuration of a negative electrode induded in a conventional lithium ion secondary battery.

### [Description of Embodiments]

### [First Embodiment]

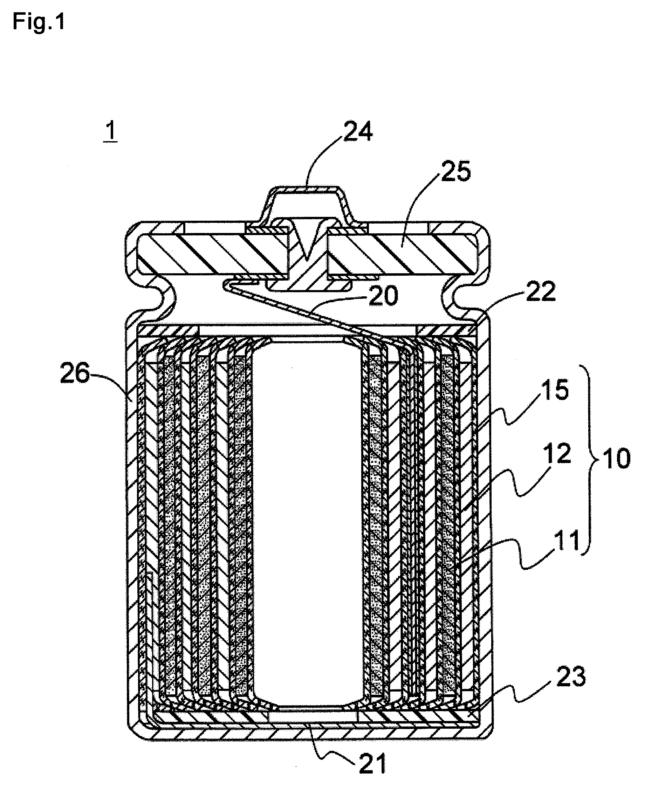

Fig. 1 is a longitudinal cross-sectional view schematically showing the configuration of a lithium ion secondary battery 1 of this embodiment. Fig. 2 is a longitudinal cross-sectional view schematically showing the configuration of a negative electrode 12 included in the lithium ion secondary battery 1 shown in Fig. 1.

The lithium ion secondary battery 1 is a cylindrical lithium ion secondary battery in which a wound electrode assembly 10 (hereinafter simply referred to as an "electrode assembly 10") and a non-aqueous electrolyte (not shown) is encased in a bottomed cylindrical battery case 26 (hereinafter simply referred to as a "battery case 26"). The electrode assembly 10 indudes a positive electrode 11, a negative electrode 12, a lithium ion conductive layer 13, a porous heat-resistant layer 14, and a separator 15.

The negative electrode 12 shown in Fig. 2 indudes a negative electrode current collector 30 made of a metal foil, a negative electrode active material layer 31 laminated on each of both surfaces of the negative electrode current collector 30, a lithium ion conductive layer 13 laminated on the surface of the negative electrode active material layer 31, and a porous heat-resistant layer 14 laminated on the surface of the lithium ion conductive layer 13.

The negative electrode active material layer 31 is, for example, a layer laminated on a surface of the negative electrode current collector 30 and composed of particles of a negative electrode active material 32 which are adhered together with a binder. There are gaps between the particles of the negative electrode active material 32. The particles of the negative electrode active material 32 may be arranged irregularly or may be arranged regularly.
The lithium ion conductive layer 13 is a layer mainly induding a lithium ion conductive gel swelled with non-aqueous electrolyte.

The porous heat-resistant layer 14 is, for example, a layer induding electrically insulating particles at a high concentration. If intemal short circuit occurs in the lithium ion secondary battery 1, the porous heat-resistant layer 14 acts to prevent a short-circuited portion from expanding and thus to prevent an abrupt increase in temperature due to a large amount of heat generated in association with expansion of the short-circuited portion.

As described above, the following problems are involved when the porous heat-resistant layer 14 induding insulating partides at a high concentration is directly formed on the surface of the negative electrode active material layer 31. First, the insulating particles entering the gaps in the negative electrode active material layer 31 worsen the permeability of the non-aqueous electrolyte throughout the negative electrode active material layer 31, and thus the lithium ion conductivity of the negative electrode active material layer 31 is reduced. Further, the electrical conductivity between the particles of the negative electrode active material 32 is also reduced. As a result, the load characteristics of the lithium ion secondary battery 1 are deteriorated. Secondly, due to roughness on the surface of the negative electrode active material layer 31 formed of the partides of the negative electrode active material 32, pinholes tend to occur in the porous heat-resistant layer 14, causing the safety of the lithium ion secondary battery 1 to be reduced.

In the negative electrode 12 of this embodiment, the problems as described above are eliminated by interposing the lithium ion conductive layer 13 between the negative electrode active material layer 31 and the porous heat-resistant layer 14. Specifically, since the lithium ion conductive layer 13 is formed, the porous heat-resistant layer 14 can be formed on the flat surface of the lithium ion conductive layer 13, and therefore, pinholes are unlikely to occur in the porous heat-resistant layer 14. Further, since the negative electrode active material layer 31 is coated with the lithium ion conductive layer 13, the insulating particles are unlikely to enter the gaps between the particles of the negative electrode active material 32.
As such, the load characteristics of the lithium ion secondary battery 1 can be maintained at a high level, and at the same time, the safety of the lithium ion secondary battery 1 can be further improved.

In this embodiment, an example in which the lithium ion conductive layer 13 and the porous heat-resistant layer 14 are formed on the surface of the negative electrode active material layer 31 is described above as a typical example. However, forming the lithium ion conductive layer 13 and the porous heat-resistant layer 14 on the surface of a positive electrode active material layer produces a similar effect. Alternatively, the lithium ion conductive layer 13 and the porous heat-resistant layer 14 may be formed on both the surface of the negative electrode active material layer and the surface of the positive electrode active material layer. As described above, in this embodiment, the lithium ion conductive layer 13 and the porous heat-resistant layer 14 may be applied to both surfaces of the positive electrode 11 and the negative electrode 12.

Next, a production method of the lithium ion secondary battery 1 is described in detail.

First, in relation to the production of the electrode assembly 10 including the positive electrode 11, the negative electrode 12, and the separator 15 interposed between the positive electrode 11 and the negative electrode 12, the negative electrode 12, the positive electrode 11, and the separator 15 are described in detail in this order.

The negative electrode 12, as shown in Fig. 2, indudes the negative electrode current collector 30, the negative electrode active material layer 31 laminated on a surface of the negative electrode current collector 30, the lithium ion conductive layer 13 laminated on the surface of the negative electrode active material layer 31, and the porous heat-resistant layer 14 laminated on the surface of the lithium ion conductive layer 13.
For the negative electrode current collector 30, a metal foil such as copper foil, copper alloy foil, stainless steel foil, and nickel foil may be used. Among these, copper foil is preferred. The thickness of the negative electrode current collector 30 is not particularly limited, but is preferably 5 µm to 50 µm.

The negative electrode active material layer 31 is formed on both surfaces of the negative electrode current collector 30 in this embodiment, but not limited thereto, and may be formed on one surface of the negative electrode current collector 30. The negative electrode active material layer 31 can be formed by, for example, applying a negative electrode material mixture slurry onto a surface of the negative electrode current collector 30, and drying and rolling the applied film. On the surface (i.e., the surface in contact with the lithium ion conductive layer 13, the description of which is given below) and in the interior of the negative electrode active material layer 31 thus formed, there tend to be gaps between the particles of the negative electrode active material 32.
The negative electrode material mixture slurry can be prepared by mixing the negative electrode active material 32 and a binder with a solvent.

For the negative electrode active material 32, any material commonly used in the field of lithium ion secondary batteries may be used. Examples of such material indude carbon materials, such as natural graphite, artificial graphite, and hard carbon; elements capable of forming an alloy with lithium, such as Al, Si, Zn, Ge, Cd, Sn, Ti, and Pb; silicon compounds, such as SiOₓ, where 0 < x < 2; tin compound, such as SnO; lithium metal; lithium alloys, such as Li-Al alloy; and alloys containing no lithium, such as Ni-Si alloy and Ti-Si alloy. This negative electrode active material 32 may be used singly or in combination of two or more.

Examples of the binder indude resin materials, such as polytetrafluoroethylene, polyvinylidene fluoride, and polyacrylic acid; and rubber materials, such as styrene-butadiene rubber containing acrylic monomers (trade name: BM-500B, available from Zeon Corporation, Japan) and styrene-butadiene rubber (trade name: BM-400B, available from Zeon Corporation, Japan).
Examples of the solvent to be mixed with the negative electrode active material 32 and the binder indude organic solvents, such as N-methyl-2-pyrrolidone, tetrahydrofuran, and dimethytformamide; and water.

The negative electrode material mixture slurry may further include a conductive agent, a thickening agent, and the like. Examples of the conductive agent indude carbon blacks, such as acetylene black and Ketjen black; and graphites, such as natural graphite and artificial graphite. Examples of the thickening agent indude carboxymethyl cellulose, polyethylene oxide, and modified polyacrylonitrile rubbers. The modified polyacrylonitrile rubbers are exemplified by BM-720H (trade name) available from Zeon Corporation, Japan.

It should be noted that when the negative electrode active material 32 is an element capable of forming an alloy with lithium, a silicon compound, a tin compound, or the like, the negative electrode active material layer 31 may be formed by a vapor phase method such as chemical vapor deposition, vacuum vapor deposition, and sputtering.

The lithium ion conductive layer 13 is laminated on the surface of the negative electrode active material layer 31. The lithium ion conductive layer 13 is formed on the surface of the negative electrode active material layer 31 in this embodiment, but not limited thereto, and the lithium ion conductive layer 13 may be formed on the surface of the positive electrode active material layer. Alternatively, the lithium ion conductive layer 13 may be formed on the surface of the positive electrode active material layer and the surface of the negative electrode active material layer 31. Here, the surface of the positive electrode active material layer is a surface opposite to the surface thereof in contact with the positive electrode current collector; and the surface of the negative electrode active material layer 31 is a surface opposite to the surface thereof in contact with the negative electrode current collector 30.

The lithium ion conductive layer 13 includes a lithium ion conductive gel which is in a swelled state as a result of contact with non-aqueous electrolyte. A preferred example of such a lithium ion conductive gel is a lithium ion conductive gel containing a non-aqueous electrolyte and a swellable resin component capable of swelling upon contact with non-aqueous electrolyte (hereinafter simply referred to as a "swellable resin component).
The lithium ion conductive gel induded in the lithium ion conductive layer 13 has lithium ion conductivity, adhesive property, and electrically insulating property. The adhesive property is an adhering property exerted with respect to the insulating metal oxide particles, the positive electrode active material, and the negative electrode active material 32.

Due to the inclusion of the lithium ion conductive gel with such properties in the lithium ion conductive layer 13, the lithium ion conductive layer 13 is firmly adhered to the surface of the negative electrode active material layer 31, and the porous heat-resistant layer 14 is reliably held on the surface of the lithium ion conductive layer 13. As a result, the effect obtained by providing an insulating layer composed of the lithium ion conductive layer 13 and the porous heat-resistant layer 14 can be maintained throughout the service period of the lithium ion secondary battery 1.

Another preferred example of the lithium ion conductive gel contains a non-aqueous electrolyte and a swellable resin component, and does not contain inorganic particles. The inorganic particles are, for example, insulating metal oxide particles.

When a lithium ion conductive gel containing inorganic partides is used, the inorganic partides enter the gaps between the partides of the negative electrode active material 32. This worsens the permeability of the non-aqueous electrolyte throughout the negative electrode active material layer 31, causing the lithium ion conductivity of the negative electrode active material layer 31 to be reduced. In contrast, when a lithium ion conductive gel containing no inorganic particles is used, the gaps will not be dogged with inorganic particles. Therefore, the lithium ion conductivity of the negative electrode active material layer 31 will not be reduced, and the load characteristics of the lithium ion secondary battery 1 can be maintained at a high level.

Further, in the lithium ion conductive layer 13 formed by using the lithium ion conductive gel containing no inorganic partides, the occurrence of pinholes is significantly reduced. As such, even when pinholes occur in the porous heat-resistant layer 14, the number of pinholes that penetrate thorough the insulating layer composed of the lithium ion conductive layer 13 and the porous heat-resistant layer 14 in the thickness direction is remarkably decreased. As a result, intemal short circuit becomes less likely to occur, and the lithium ion secondary battery 1 having a high level of safety is provided.

Furthermore, even if some pinholes occur in the porous heat-resistant layer 14, the influence thereof on the safety of the lithium ion secondary battery 1 is not significant. As such, advantageously, the material for forming the porous heat-resistant layer 14 can be selected more freely.

The lithium ion conductive layer 13 can be formed on the surface of the negative electrode active material layer 31 by a production method including, for example, the steps of solution preparation, film formation, and impregnation.
First, the solution preparation step is performed, In the solution preparation step, a swellable resin component is dissolved in an organic solvent to prepare a swellable resin solution.

For the swellable resin component, any synthetic resin capable of swelling upon contact with non-aqueous electrolyte may be used without particular limitation, but a fluorocarbon resin is preferred in view of the adhering property of the lithium ion conductive layer 13 with respect to the negative electrode active material layer 31 and the positive electrode active material layer. The swellable resin component swells upon contact with non-aqueous electrolyte and becomes conductive to lithium ions.

Examples of the fluorocarbon resin indude polyvinylidene fluoride (PVDF), a copolymer of vinylidene fluoride (VDF) and an olefinic monomer, and polytetrafluoroethylene. Examples of the olefinic monomer indude tetrafluoroethylene (TFE), hexafluoropropylene (HFP), and ethylene. Preferred examples among these indude PVDF, and a copolymer of VDF and HFP, in which a copolymer of VDF and HFP is more preferred.

For the organic solvent in which the swellable resin component is to be dissolved, non-aqueous solvents as described below that may be induded in the non-aqueous electrolyte may be used. Among these, linear carbonates are preferred, and dimethyl carbonate is more preferred.

A preferred combination of the swellable resin component with the organic solvent is a combination of a copolymer of VDF and HFP with dimethyl carbonate. By using this combination, the thickness and the like of the lithium ion conductive layer 13 can be easily controlled, enabling the formation of the lithium ion conductive layer 13 having a uniform thickness and good lithium ion conductivity, on the surface of the negative electrode active material layer 31.

The solution preparation step is followed by the film formation step. In the film formation step, the swellable resin solution prepared in the solution preparation step is applied onto the surface of the negative electrode active material layer 31, and the applied film is dried. A swellable resin layer is thus formed on the surface of the negative electrode active material layer 31. The swellable resin solution is applied by, for example, using an applicator. Alternatively, the negative electrode 12 may be immersed in the swellable resin solution.

The film formation step is followed by the impregnation step. In the impregnation step, the swellable resin layer formed on the surface of the negative electrode active material layer 31 in the film formation step is impregnated with a non-aqueous electrolyte. The impregnation of the swellable resin layer with a non-aqueous electrolyte is performed by bringing the non-aqueous electrolyte and the swellable resin layer into contact with each other. More specifically, for example, the negative electrode 12 with the swellable resin layer formed thereon is immersed in the non-aqueous electrolyte. Here, in view of the productivity of batteries and other factors, it is preferable to bring the swellable resin layer and the non-aqueous electrolyte into contact with each other after the porous heat-resistant layer 14 is formed on the surface of the swellable resin layer.

By performing the impregnation step, the swellable resin component contained in the swellable resin layer is brought into contact with the non-aqueous electrolyte and swells, and thus becomes conductive to lithium ions. As a result, the swellable resin layer becomes the lithium ion conductive layer 13.
For the non-aqueous electrolyte used in the impregnation step, a commonly used non-aqueous electrolyte induding a lithium salt and a non-aqueous solvent may be used.

Examples of the lithium salt indude LiPF₆, LiClO4, UBF₄, LiAlCl₄, LiSbF₆, LiSCN, LiAsF₆, LiB₁₀Cl₁₀, LiCl, LiBr, Lil, lithium tetrachloroborate, lithium tetraphenytborate, lithium lower aliphatic carboxylate, LiCO₂CF₃, LiSO₃CF₃, Li(SO₃CF₃)₂, LiN(SO₂CF₃)₂, and a lithium imide salt. These lithium salts may be used singly or in combination of two or more. The concentration of the lithium salt in the non-aqueous solvent is not particularly limited, but is preferably 0.2 mol/L to 2 mol/L, and more preferably 0.5 mol/L to 1.5 mol/L.

Examples of the non-aqueous solvent indudes cydic carbonates, chain carbonates, aliphatic carboxylic acid esters, lactones, chain ethers, cydic ethers, and other non-aqueous solvents except the above.

Examples of cydic carbonates indude ethylene carbonate, propylene carbonate, butylene carbonate, and propylene carbonate derivatives.
Examples of chain carbonates indude dimethyl carbonate, diethyl carbonate, ethyl methyl carbonate, and dipropyl carbonate.
Examples of aliphatic carboxylic acid esters indude methyl formate, methyl acetate, methyl propionate, and ethyl propionate.

Examples of lactones include γ -butyrolactone and γ-valerolactone.
Examples of chain ethers include 1,2-dimethoxyethane, 1,2-diethoxyethane, ethoxymethoxyethane, ethylether, and trimethoxymethane.
Examples of cyclic ethers include tetrahydrofuran, 2-methyltetrahydrofiaran, and tetrahydrofuran derivatives.

Examples of other non-aqueous solvents except the above include dimethylsulfoxide, 1,3-dioxolane, dioxolane derivatives, formamide, acetamide, dimethylformamide, acetonitrile, propionitrile, nitromethane, ethyl monoglyme, phosphotriester, suffolane, methyl sulfolane, 1,3-dimethyl-2-imidazolidinone, 3-methyl-2-oxazolidinone, 1,3-propane sultone, anisole, N-methyl-2-pyrrolidone, and the like.

These non-aqueous solvents may be used singly or in combination of two or more. Among these, mixed solvents of cydic carbonates and chain carbonates, and mixed solvents of cydic carbonates, chain carbonates, and aliphatic carboxylic acid esters are preferred.

The lithium ion conductive layer 13 can also be formed by a method other than the above-described production method. Specifically, the lithium ion conductive layer 13 can also be formed by dissolving a swellable resin component in a non-aqueous electrolyte, applying a resultant solution onto the surface of the negative electrode active material layer 31, and drying the applied film to remove part of the non-aqueous solvent from the applied film. The lithium ion conductive layer 13 can be formed on the surface of the positive electrode active material layer in the same manner as in forming the lithium ion conductive layer 13 on the surface of the negative electrode active material layer 31.

The lithium ion conductive layer 13 obtained in the manner as described above, at the interface with the negative electrode active material layer 31, enters the gaps between the particles of the negative electrode active material 32 on the surface of the negative electrode active material layer 31. For this reason, the thickness of the lithium ion conductive layer 13 changes slightly depending on the condition on the surface of the negative electrode active material layer 31.

The thickness of the lithium ion conductive layer 13 is preferably 0.1 µm to 3 µm, and more preferably 0.1 µm to 1 µm. Here, the thickness of the lithium ion conductive layer 13 is defined as the length of a perpendicular drawn from the highest point of the surface of the negative electrode active material layer 31 to the surface in contact with the porous heat-resistant layer 14 of the lithium ion conductive layer 13. The thickness of the lithium ion conductive layer 13 can be easily controlled by adjusting the viscosity of the swellable resin solution, the viscosity of the solution obtained by dissolving the swellable resin component in the non-aqueous electrolyte, the amount of the applied swellable resin solution, and other parameters.

The porous heat-resistant layer 14 is laminated on the surface of the lithium ion conductive layer 13. The surface of the lithium ion conductive layer 13 is a surface of the lithium ion conductive layer 13 opposite to the surface thereof in contact with the negative electrode active material layer 31. Here, it is not necessary that there is a dear boundary between the lithium ion conductive layer 13 and the porous heat-resistant layer 14. There may be present one or more layer in which the components of the lithium ion conductive layer 13 and the components of the porous heat-resistant layer 14 are present in a mixed state, between the lithium ion conductive layer 13 and the porous heat-resistant layer 14.

The porous heat-resistant layer 14 has excellent heat resistance and mechanical strength. This serves to reinforce the mechanical strength of the lithium ion conductive layer 13 and to maintain the shape of the lithium ion conductive layer 13. As a result, the lithium ion conductive layer 13 and the negative electrode active material layer 31 are favorably kept in contact with each other, and thus, the reduction in the lithium ion conductivity of the negative electrode active material 31 can be suppressed. Further, the porous heat-resistant layer 14 has functions, for example, of preventing the occurrence of intemal short circuit, minimizing the expansion of the short-circuited portion in the event of internal short circuit, and reducing the shrinkage of the separator 15 by heat.

The porous heat-resistant layer 14 indudes insulating metal oxide particles and a binder. The porous heat-resistant layer 14 can be formed by a production method including, for example, the steps of slurry preparation, slurry application, and drying.
First, the slurry preparation step is performed. In the slurry preparation step, insulating metal oxide partides, a binder, and an organic solvent are mixed together to prepare a slurry.

For the insulating metal oxide particles, any metal oxide partides with no electrical conductivity may be used, but in view of the chemical stability thereof in the lithium ion secondary battery 1 and other factors, particles of a metal oxide such as alumina, silica, titania, zirconia, magnesia, and yttria are preferred, and alumina partides are further preferred. These insulating metal oxide particles may be used singly or in combination of two or more.

For the binder, for example, resin binders such as PVDF and PTFE, and rubber binders such as styrene-butadiene rubber containing acrylic monomers (BM-500B) and modified polyacrylonitrile rubber may be used. The amount of the binder to be added is, for example, 0.5 to 10 parts by mass per 100 parts by mass of the insulating metal oxide particles. When PTFE or styrene-butadiene rubber containing acrylic monomers (BM-500B) is used as the binder, it is preferably to use a thickening agent in combination with the binder. For the thickening agent, the same thickening agent as induded in the negative electrode active material layer 31 may be used.

The organic solvent is not particular limited, but N-methyl-2-pyrrolidone (NMP) and the like may be preferably used because, in these solvents, the components contained in the lithium ion conductive layer 13 will not dissolve vigorously, when the slurry is applied onto the surface of the lithium ion conductive layer 13. The insulating metal oxide partides, the binder, and the organic solvent are mixed together, for example, by using a double-arm kneader.

The slurry preparation step is followed by the slurry application step. In the slurry application step, the slurry obtained in the slurry preparation step is applied onto the surface of the lithium ion conductive layer 13 or the surface of the swellable resin layer, to form an applied film. The slurry is applied with, for example, a doctor blade, a die, or a gravure roll.

The slurry application step is followed by the drying step. In the drying step, the applied film formed on the surface of the lithium ion conductive layer 13 or the surface of the swellable resin layer in the slurry application step is dried to remove the organic solvent from the applied film. As a result, the porous heat-resistant layer 14 is formed. The thickness of the porous heat-resistant layer 14 is not particularly limited, but is preferably 1 µm to 20 µm. The porosity of the porous heat-resistant layer 14 is also not particularly limited, but is preferably 20% to 70%.

In the porous heat-resistant layer 14 thus formed, the content of the insulating metal oxide particles is preferably 80% by mass or more of the total mass of the porous heat-resistant layer 14, more preferably 80 to 99.5% by mass, and furthermore preferably 90 to 99.5% by mass, with the balance being the binder.

The positive electrode 11 includes a positive electrode current collector and a positive electrode active material layer formed on a surface of the positive electrode current collector.
For the positive electrode current collector, a metal foil such as aluminum foil, aluminum alloy foil, stainless steel foil, and titanium foil may be used. Among these, aluminum foil and aluminum alloy foil are preferred. The thickness of the positive electrode current collector is not particularly limited, but is preferably 10 µm to 30 µm.

The positive electrode active material layer is formed on both surfaces of the positive electrode current collector in this embodiment, but not limited thereto, and may be formed on one surface of the positive electrode current collector. The thickness of the positive electrode active material layer formed on one surface of the positive electrode current collector is not particularly limited, but is preferably 30 µm to 200 µm. The positive electrode active material layer can be formed by, for example, applying a positive electrode material mixture slurry onto a surface of the positive electrode current collector, and drying and rolling the applied film. The positive electrode material mixture slurry can be prepared by mixing a positive electrode active material, a binder, and a conductive agent with a solvent.

The positive electrode active material may be any positive electrode active material commonly used in the field of lithium ion secondary batteries, but preferred are a lithium-containing composite oxide and an olivine-type lithium phosphate.

The lithium-containing composite oxide is a metal oxide containing lithium and a transition metal element or a metal oxide in which part of the transition metal element in the foregoing metal oxide is replaced with a different element.
Examples of the transition metal element indude Sc, Y, Mn, Fe, Co, Ni, Cu, and Cr. Preferred examples of the transition metal element indude Mn, Co, and Ni. Examples of the different element indude Na, Mg, Zn, Al, Pb, Sb, and B. Preferred examples of the different element indude Mg and Al. These transition metal elements may be used singly or in combination of two or more; and these different elements may be used singly or in combination of two or more.

Examples of the lithium-containing composite oxide indude Li_{ℓ}CoO₂, Li_{ℓ}NiO₂, Li_{ℓ}MnO₂, Li_{ℓ}CoₘNi₁₋ₘO₂, Li_{ℓ}CoₘM₁₋ₘOₙ,
Li_{ℓ}Ni₁₋ₘMₘOₙ, Li_{ℓ}Mn₂O₄, and Li_{ℓ}Mn₂₋ₘMₙO₄, where M represents at least one element selected from the group consisting of Na, Mg, Sc, Y, Mn, Fe, Co, Ni, Cu, Zn, Al, Cr, Pb, Sb, and B,
0 < ℓ ≤ 1.2, 0 ≤ m ≤ 0.9, and 2.0 ≤ n ≤ 2.3. Among these, Li_{ℓ}CoₘM₁₋ₘOₙ is preferred.

Examples of the otivine-type lithium phosphate indude , for example, LiXPO₄ and Li₂XPO₄F, where X represents at least one element selected from the group consisting of Co, Ni, Mn, and Fe.

The number of moles of lithium in each formula above representing a lithium-containing composite oxide or olivine-type lithium phosphate is a value measured immediately after the positive electrode active material is prepared, and increases or decreases during charging and discharging. These positive electrode active materials may be used singly or in combination of two or more.

Examples of the binder indude resin materials, such as polytetrafluoroethylene and polyvinylidene fluoride; and rubber materials, such as styrene-butadiene rubber containing acrylic monomers (trade name: BM-500B, available from Zeon Corporation, Japan) and styrene-butadiene rubber (trade name: BM-400B, available from Zeon Corporation, Japan). Examples of the conductive agent include carbon blacks, such as acetylene black and Ketjen black; and graphites, such as natural graphite and artificial graphite. The contents of the binder and the conductive agent in the positive electrode active material layer can be adjusted, as appropriate, according to, for example, the design of the positive electrode 11 and the lithium ion secondary battery 1.

Examples of the solvent to be mixed with the positive electrode active material, the binder, and the conductive agent indude organic solvents, such as N-methyl-2-pyrrolidone, tetrahydrofuran, and dimethylformamide; and water.

For the non-aqueous electrolyte to be encased together with the electrode assembly 10 in the battery case 26, the same non-aqueous electrolyte as used in forming the lithium ion conductive layer 13 may be used. The non-aqueous electrolyte contains the above-described lithium salt and non-aqueous solvent, and may further contain an additive. Examples of the additive indude vinylene carbonate, vinyl ethylene carbonate, cydohexylbenzene, and fluorobenzene. These additives may be used singly or in combination of two or more.

For the separator 15, a porous film made of a resin may be used. In particular, porous films made of polyolefin such as polyethylene and polypropylene is preferred. Among these, a single-layered porous film made of polyethylene, a multilayered porous film composed of a single-layered porous film made of polyethylene and a single-layered porous film made of polypropylene, and the like are preferred. These films are generally oriented films.

The positive electrode 11, the negative electrode 12 in which the lithium ion conductive layer 13 and the porous heat-resistant layer 14 are laminated in this order on the surface of the negative electrode active material layer 31, and the separator 15, which are induded in the electrode assembly 10 of this embodiment, all have a belt-like shape. The electrode assembly 10 is formed by winding the positive electrode 11 and the negative electrode 12 with the separator 15 interposed therebetween, with one ends of these in the longitudinal direction using as the winding axis.

The lithium ion secondary battery 1 is fabricated by, for example, in the manner as described below.
First, one end of a positive electrode lead 20 is connected to the positive electrode 11, and the other end thereof is connected to a positive electrode terminal 24. The positive electrode terminal 24 is supported by a sealing plate 25. One end of a negative electrode lead 21 is connected to the negative electrode 12, and the other end thereof is connected to the inner bottom surface of the battery case 26 serving as a negative electrode terminal.

Next, the an upper insulating plate 22 and a lower insulating plate 23 are mounted on both ends of the electrode assembly 10 in the longitudinal direction, respectively, and then, the electrode assembly 10 is encased in the battery case 26. Subsequently, after a non-aqueous electrolyte is injected into the battery case 26, the sealing plate 25 is mounted at the opening of the battery case 26, and then the opening end of the battery case 26 is crimped onto the sealing plate 25, to seal the battery case 26. The lithium ion secondary battery 1 is thus obtained.

For the positive electrode lead 20, for example, an aluminum lead may be used. For the negative electrode lead 21, for example, a nickel lead or a nickel alloy lead may be used. The positive electrode terminal 24 and the battery case 26 may be made of a metal material such as stainless steel and iron. The upper insulating plate 22, the lower insulating plate 23 and the sealing plate 25 may be formed of an insulating material such as a resin material and a rubber material.

Description is made of a cylindrical battery induding a wound electrode assembly in this embodiment, but this should not be construed as a limitation. The lithium ion secondary battery of the present invention is applicable to various types of batteries, such as a prismatic battery induding a wound electrode assembly, a prismatic battery induding a flat electrode assembly obtained by press-molding a wound electrode assembly, a laminate film battery obtained by packing a stacked electrode assembly in a laminate film pack, and a coin battery induding a stacked electrode assembly.

### Examples

The present invention is specifically described below with reference to examples and comparative examples, but the present invention is not limited to the following examples.

### (Example 1)

### (1) Production of positive electrode

First, 3 kg of lithium cobalt oxide, 1 kg of an NMP solution containing 12% by mass of PVDF (trade name: PVDF#1320, available from KUREHA CORPORATION), 90 g of acetylene black, and an appropriate amount of NMP were stirred in a double-arm kneader, to form a positive electrode material mixture slurry. Next, the prepared slurry was applied onto both surfaces of a positive electrode current collector made of a 15-µm-thick aluminum foil, followed by drying the applied film and then rolling these until the total thickness reached 175 µm. The current collector with the applied films formed thereon was cut in the size of 56 mm in width and 600 mm in length, to produce a positive electrode. One end of an aluminum lead was connected to a portion of the positive electrode where the positive electrode current collector was exposed.

### (2) Production of negative electrode

First, 3 kg of artificial graphite, 75 g of aqueous dispersion containing 40% by mass of styrene-butadiene rubber particles (trade name: BM-400B, available from Zeon Corporation, Japan), 30 g of carboxymethyl cellulose, and an appropriate amount of water were stirred in a double-arm kneader, to prepare a negative electrode material mixture slurry. Next, the prepared slurry was applied onto both surfaces of a negative electrode current collector made of a 10-µm-thick copper foil, followed by drying the applied film and then rolling these until the total thickness reached 180 µm. The current collector with the applied films formed thereon was cut in the size of 57.5 mm in width and 650 mm in length, to produce a negative electrode. One end of a nickel lead was connected to a portion of the negative electrode where the negative electrode current collector was exposed.

### (3) Formation of swellable resin layer

A dimethyl carbonate solution containing 3% by mass of VDF-HFP copolymer (trade name: #8500, available from KUREHA CORPORATION) was applied on the surface of the negative electrode active material layer by using an applicator, and then dried, to form a swellable resin layer. The thickness of the swellable resin layer thus formed was 2 µm.

### (4) Formation of porous heat-resistant layer

First, 970 g of alumina particles having a median diameter of 0.3 µm, 375 g of an NMP solution containing 8% by mass of modified polyacrylonitrile rubber (trade name: BM-720H, available from Zeon Corporation, Japan), and an appropriate amount of NMP were stirred in a double-arm kneader, to prepare a slurry for a porous heat-resistant layer. Next, the prepared slurry was applied onto the surface of the swellable resin layer formed in the above (3), and dried at 120°C under vacuum for 10 hours, whereby a porous heat-resistant layer was formed. The thickness of the porous heat-resistant layer thus formed was 4 µm.

### (5) Fabrication of lithium ion secondary battery

The positive electrode, and the negative electrode in which the swellable resin layer and the porous heat-resistant layer were formed in this order on the surface of the negative electrode active material layer were wound with a separator made of a 16-µm-thick polyethylene microporous film interposed therebetween, to form an electrode assembly. An upper insulating plate and a lower insulating plate were mounted on both ends of the electrode assembly in the longitudinal direction, respectively, and the electrode assembly with the insulating plates mounted thereon were then inserted in a bottomed cylindrical battery case (diameter 18 mm, height: 65 mm, inner diameter: 17.85mm). The other ends of the aluminum lead and the nickel lead were connected to the lower portion of a positive electrode terminal and the inner bottom surface of the battery case, respectively.

Thereafter, 5.5 g of the non-aqueous electrolyte was injected into the battery case. A sealing plate supporting the positive electrode terminal was mounted at the opening of the battery case, and the opening end of the battery case was crimped onto the sealing plate, to seal the battery case. In such a manner, a cylindrical lithium ion secondary battery having a design capacity of 2000 mAh was produced. Here, when the non-aqueous electrolyte was injected, the swellable resin layer induded the electrode assembly and the non-aqueous electrolyte were brought into contact with each other, allowing the swellable resin layer to swell, and thus forming a lithium conductive layer.

The non-aqueous electrolyte used here was obtained by adding 3 parts by mass of vinylene carbonate to 97 parts by mass of a mixed solvent containing ethylene carbonate, dimethyl carbonate and ethyl methyl carbonate at a ratio of 1:1:1 by volume, and dissolving LiPF₆ in the resultant mixture at a concentration of 1.0 mol/L.

### (Comparative Example 1)

A lithium ion secondary battery was fabricated in the same manner as in Example 1, except that no lithium ion conductive layer was formed, and the porous heat-resistant layer was directly formed on the surface of the negative electrode.

### (Comparative Example 2)

A lithium ion secondary battery was fabricated in the same manner as in Example 1, except that only the lithium ion conductive layer was formed, and no porous heat-resistant layer was formed.

### (Comparative Example 3)

A lithium ion secondary battery was fabricated in the same manner as in Example 1, except that: in forming a swellable resin layer, a slurry obtained by dissolving and dispersing VDF-HFP copolymer (# 8500) and alumina particles having a median diameter of 0.3 µm in dimethyl carbonate (content of VDF-HFP copolymer (# 8500): 3 mass%, content of alumina particles: 6 mass%) was used in place of the dimethyl carbonate solution containing 3% by mass of VDF-HFP copolymer (# 8500); and no porous heat-resistant layer was formed.

### (Comparative Example 4)

A lithium ion secondary battery was fabricated in the same manner as in Example 1, except that the porous heat-resistant layer was formed on the surface of negative electrode active material layer, and the lithium ion conductive layer was formed on the surface of the porous heat-resistant layer.
The configurations of the lithium ion conductive layer and the porous heat-resistant layer in the lithium ion secondary batteries obtained in Example 1 and Comparative Examples 1 to 4 are shown in Table 1.

**[Table 1]**

| | Lithium ion conductive layer | Porous heat-resistant layer |
|---|---|---|
| Example 1 | VDF-HFP copolymer gel layer | Alumina-containing porous heat-resistant layer |
| Comparative Example 1 | Not formed Not formed | Alumina-containing porous heat-resistant layer |
| Comparative Example 2 | VDF-HFP copolymer gel layer | Not formed |
| Comparative Example 3 | Alumina-containing VDF-HFP copolymer gel layer | Not formed |
| Comparative Example 4 | Alumina-containing porous heat resistant layer | VDF-HFP copolymer gel layer |

### (Test Example 1)

The lithium ion secondary batteries obtained in Example 1 and Comparative Examples 1 to 4 were subjected to nail penetration test and charge/discharge test as described below, to evaluate the safety and the load characteristics.

### [Nail penetration test]

Each of the batteries was subjected to a constant-current charge and a subsequent constant-voltage charge under the charging conditions as shown below. Thereafter, in a 20°C environment, an iron nail of 2.7 mm in diameter was penetrated into the charged battery from the side surface thereof to the depth of 2 mm at a rate of 5 mm/sec, to cause an intemal short circuit to occur. The temperature of the battery during the nail penetration was measured with a thermocouple disposed on the side surface of the battery at a point away from the point at which the nail was penetrated. The temperatures reached after 30 seconds are shown in Table 2.

### Charging conditions:

Constant-current charge; Charge current 1400 mA, Charge-cutoff voltage 4.3 V
Constant-voltage charge; Charge voltage 4.3 V, Charge-cutoff current 100 mA

### [Charge-discharge test]

Each of the batteries was subjected to a constant-current charge, a constant-voftage charge, and a constant-current discharge in this order in a 20°C environment under the charging/discharging conditions as shown below, to determine a discharge capacity at the 0.2 C discharge.

### Charging/discharging conditions:

Constant-current charge; Charge current 1400 mA, Charge-cutoff voltage 4.2 V
Constant-voltage charge; Charge voltage 4.2 V, Charge-cutoff current 100 mA
Constant-current discharge; Discharge current 400 mA (0.2 C), Discharge-cutoff voltage 3.0 V

Further, each of the batteries was subjected to a constant-current charge, a constant-voltage charge, and a constant-current discharge in this order in a 20°C environment under the charging/discharging conditions as shown below, to determine a discharge capacity at the 3 C discharge. The percentage (%) of the discharge capacity at the 3 C discharge to that at the 0.2 C discharge was calculated as a load characteristic. The results are shown in Table 2.

### Charging/discharging conditions:

Constant-current charge; Charge current 1400 mA, Charge-cutoff voltage 4.2 V
Constant-voltage charge; Charge voltage 4.2 V, Charge-cutoff current 100 mA
Constant-current discharge; Discharge current 6000 mA (3 C), Discharge-cutoff voltage 3.0 V

**[Table 2]**

| | Nail penetration test Battery surface temperature (°C) | Load characteristic (%) |
|---|---|---|
| Example 1 | 82 | 80 |
| Comparative Example 1 | 93 | 68 |
| Comparative Example 2 | 127 | 79 |
| Comparative Example 3 | 121 | 72 |
| Comparative Example 4 | 95 | 65 |

From Table 2, in the battery of Example 1, the battery surface temperature in the nail penetration test was low, which shows that the safety in the event of intemal short circuit is high, and the load characteristic is also excellent.
In contrast, in the battery of Comparative Example 1 in which only the porous heat-resistant layer was formed, the battery surface temperature was comparatively low, but the deterioration in the load characteristic was significant. In the battery of Comparative Example 2 in which only the lithium ion conductive layer was formed, there was little deterioration in the load characteristic, but the battery surface temperature exceeded 100°C, which shows the safety in the event of intemal short circuit is low.

In the battery of Comparative Example 3 in which only the alumina-containing lithium ion conductive layer was formed, the battery surface temperature exceeded 100°C and the load characteristic was significantly deteriorated. In the battery of Comparative Example 4 in which the lithium ion conductive layer and the porous heat-resistant layer were formed in the order opposite to that in Example 1, the battery surface temperature was comparatively low, but the load characteristic was significantly deteriorated.

Based on the foregoing results, it is dear that by employing the configuration in which the lithium ion conductive layer is formed on the surface of the active material layer, and the porous heat-resistant layer is formed on the surface of the lithium ion conductive layer, a lithium ion secondary battery having both a high level of safety against intemal short circuit and a high level of load characteristics can be obtained.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The lithium ion secondary battery of the present invention is applicable for the same applications as those of the conventional lithium ion secondary batteries, and is particularly useful as a main power source or auxiliary power source for electronic equipment, electric equipment, machining equipment, transportation equipment, power storage equipment, and the like. Examples of the electronic equipment indude personal computers, cellular phones, mobile devices, personal digital assistants, portable game machines, and the like. Examples of the electric equipment indude vacuum cleaners, video cameras, and the like. Examples of the machining equipment indude electric tools, robots, and the like. Examples of the transportation equipment include electric vehicles, hybrid electric vehicles, plug-in HEVs, fuel cell-powered vehicles, and the like. Examples of the power storage equipment indude uninterrupted power supplies, and the like.

## Claims

1. An electrode for a lithium ion secondary battery comprising: a current collector, an electrode active material layer being laminated on a surface of the current collector, and induding an electrode active material capable of absorbing and desorbing lithium ions; a lithium ion conductive layer being laminated on a surface of the electrode active material layer, and induding a lithium ion conductive gel swelled with a non-aqueous electrolyte; and a porous heat-resistant layer being laminated on a surface of the lithium ion conductive layer, and induding insulating metal oxide particles.

2. The electrode for a lithium ion secondary battery in accordance with daim 1, wherein the lithium ion conductive gel is a fluorocarbon resin swelled with the non-aqueous electrolyte.

3. The electrode for a lithium ion secondary battery in accordance with daim 2, wherein the fluorocarbon resin is a copolymer of vinylidene fluoride and hexafluoropropylene.

4. The electrode for a lithium ion secondary battery in accordance with daim 2, wherein the lithium ion conductive layer contains no inorganic particles.

5. The electrode for a lithium ion secondary battery in accordance with daim 2, wherein the lithium ion conductive layer has a thickness of 0.1 µm to 3 µm.

6. The electrode for a lithium ion secondary battery in accordance with daim 1, wherein the porous heat-resistant layer indudes a binder in an amount of 0.5 parts by mass to 10 parts by mass per 100 parts by mass of the insulating metal oxide particles.

7. The electrode for a lithium ion secondary battery in accordance with daim 6, wherein the insulating metal oxide partides are partides of at least one metal oxide selected from the group consisting of alumina, silica, titania, zirconia, magnesia, and yttria.

8. The electrode for a lithium ion secondary battery in accordance with daim 6, wherein the insulating metal oxide particles are alumina particles.

9. The electrode for a lithium ion secondary battery in accordance with daim 6, wherein the porous heat-resistant layer has a thickness of 1 µm to 20 µm.

10. A lithium ion secondary battery comprising: an electrode assembly induding a positive electrode, a negative electrode, and a separator interposed between the positive electrode and the negative electrode; and a non-aqueous electrolyte, wherein
at least one of the positive electrode and the negative electrode is the electrode for a lithium ion secondary battery of daim 1.

11. The lithium ion secondary battery in accordance with daim 10, wherein the electrode assembly is a wound electrode assembly obtained by winding the positive electrode and the negative electrode with the separator interposed therebetween.
